# EUROPÄISCHE PATENTSCHRIFT

(11) **EP 1 332 991 B1**
(45) Veröffentlichungstag und Bekanntmachung des Hinweises auf die Patenterteilung: **05.11.2003**
(21) Anmeldenummer: 01130142.1
(22) Anmeldetag: 19.12.2001
(51) Int. Cl.: B65G 47/64, B65G 65/00

(54) **Vorrichtung zum Zusammenstellen von vorgegebenen Stapelbildern aus Formatzuschnitten**
Device for collating stacks of cut planks
Dispositif de regroupement de piles de planches decoupées

(43) Veröffentlichungstag der Anmeldung: 06.08.2003
(73) Patentinhaber: Siempelkamp Handling Systeme GmbH & Co., 82515 Wolfratshausen (DE)
(72) Erfinder:
(74) Vertreter: Szynka, Dirk

(56) Entgegenhaltungen:
- EP-A- 0 999 158
- DE-A- 19 909 001
- FR-A- 1 384 999
- FR-A- 2 351 033
- FR-A- 2 792 921

## Beschreibung

Die Erfindung bezieht sich auf eine Vorrichtung zum Zusammenstellen von Stapelbildern aus Formatzuschnitten von Platten.

Der Begriff "Platten" ist dabei sehr allgemein zu verstehen und bezieht sich grundsätzlich auf alle Plattenmaterialien, bei denen eine Aufteilung von vergleichsweise großen Formaten, die bei der Herstellung anfallen, in kleinere Formatzuschnitte zur Weiterverarbeitung in Frage kommt. Insbesondere bezieht sich die Erfindung dabei auf beschichtete und unbeschichtete Span-, OSB-, MDF- und andere Faserplatten, Gipsplatten, Mineralplatten und ganz allgemein auf Platten aus Holz, Kunststoff, Metall und daraus zusammengesetzen Materialien.

Dabei werden sogenannte Aufteilanlagen verwendet, um die Großformate als Einzelplatte oder im Paket mit Scheren, Sägen und dergleichen zuzuschneiden. Der Zuschnitt wird durch einen oder mehrere sogenannten Schnittpläne bestimmt, die in Kommissionen zusammengefasst, meistens computerberechnet und im Hinblick auf eine optimale Ausnutzung des zur Verfügung stehenden Großformats optimiert sind (sogenannte Schnittplanoptimierung). In anderen Worten soll unter Beachtung der gefragten Formatzuschnitte ein minimaler Verschnitt übrig bleiben. Dabei ist die Anordnung der einzelnen Formatzuschnitte im Schnittplan also bestimmt durch die Verschnittminimierung. Außerdem wird durch die Schnittplanoptimierung gewährleistet, dass zur Ist-Zeit nur eine definierte Anzahl von unterschiedlichen Formaten in Bearbeitung sind (sogenannte offene Positionen).

Andererseits sollen die Formatzuschnitte vor der Auslieferung aufgestapelt werden, wobei häufig mehrere Formatzuschnitte nebeneinander in einer Stapelebene liegen. Man spricht dabei von einem Stapelbild. Das Stapelbild innerhalb eines Stapels ist konstant. Jedenfalls wird es aus Formatzuschnitten gebildet, die entweder gleichartig sind oder zumindest aus bestimmten Gründen zusammengehören.

Insgesamt kann also die Anordnung der Formatzuschnitte in den Stapelbildern völlig abweichen von der Anordnung derselben Formatzuschnitte im Schnittplan.

Dementsprechend werden die Formatzuschnitte nach dem Aufteilen des Großformats soweit vereinzelt wie notwendig und dann zu Stapelbildem neu zusammengefügt. Die Erfindung betrifft eine Vorrichtung zum Zusammenstellen der Stapelbilder aus einzelnen Formatzuschnitten oder Gruppen von Formatzuschnitten, die sich bei der Vereinzelung des aufgeteilten Großformats ergeben haben. Wenn im Folgenden von Stapelbildteilen gesprochen wird, so umfasst dieser Begriff sowohl einzelne Formatzuschnitte als auch Formatzuschnittgruppen.

Eine solche Zusammenstellvorrichtung ist beispielsweise aus der DE 199 09 001 bekannt geworden.

Weiterer Stand der Technik befindet sich in der FR 2 351 033 A. Dort ist ein Etagenspeicher mit übereinander angeordneten Etagen für glasierte Fliesen dargestellt, der vertikal verstellbar ist. Die Fliesen werden vor dem Einlaufen auf mehrere parallele Strecken verteilt, um die einzelnen Etagen vollständig zu beladen. Beladene Etagenspeicher dienen zur Zwischenlagerung und können danach in Umkehrung der Arbeitsabläufe wieder entladen werden.

Weiterhin wird verwiesen auf die FR 2 792 921 A, in der eine weichenähnliche Vorrichtung für Lebensmittelpackungen dargestellt ist, welche auf einem Band transportiert werden. Dazu ist ein Teil des Transportbandes quer verfahrbar, um einzelne aus einer Mehrzahl horizontal nebeneinander liegende Kanäle auf einem breiten Transportband anzusteuern.

Ferner wird verwiesen auf die FR 1 384 999 A. Dort ist eine Vorrichtung zum Lagern von Ziegeln zur Trocknung dargestellt, die einen vertikal verstellbaren Etagenspeicher aufweist. Dieser ist darüber hinaus quer zur Transportrichtung verfahrbar, um gegen einen leeren Etagenspeicher ausgetauscht werden zu können. Der Etagenspeicher ist durch eine Transportbahn erreichbar, in der die Ziegel durch eine rechenartige Hubvorrichtung quer zur Transportbahn versetzt werden können. Der Etagenspeicher wird vollständig mit Ziegeln beladen und nach dem Trocknen der Ziegel in analoger Weise wieder entladen.

Schließlich wird verwiesen auf die EP 0 999 158 A, die eine vertikal und horizontal verfahrbare Transportplatte zeigt, mit der verschiedene Etagen einer Mehrzahl von Etagenspeichern angefahren werden können. Die Etagenspeicher sind fest.

Der vorliegenden Erfindung liegt das technische Problem zugrunde, eine neue Vorrichtung zur Zusammenstellung von Stapelbildern anzugeben, die jedenfalls im Hinblick auf bestimmte Anwendungsfälle gegenüber der in der zitierten früheren Anmeldung DE 199 09 001 beschriebenen Vorrichtung verbessert ist.

Erfindungsgemäß wird dieses Problem gelöst durch eine Vorrichtung zur Zusammenstellung von Stapelbildern von Formatzuschnitten aus Platten in einer Transportbahn für die Formatzuschnitte mit: einem Etagenspeicher mit einer Mehrzahl übereinander angeordnete Etagen, die jeweils durch eine Vertikalverstellung des Etagenspeichers in eine Transportebene der Transportbahn gebracht werden können und in die und aus denen in der Transportebene Formatzuschnitte zum Zwischenlagern und Zusammenstellen von vorgegebenen Stapelbildern in einer Transportrichtung der Transportbahn ein- und ausfahrbar sind, und einem in der Transportebene quer zu der Transportrichtung horizontal verstellbaren Transportbahnstück, wobei die Vorrichtung dazu ausgelegt ist, Stapelbildteile, die von der Transportbahn an transportiert werden, durch Einfahren in eine der Etagen und vertikales Verstellen des Etagenspeichers zwischenzulagern und bei Anlieferung ergänzender Stapelbildteile durch diese zu ergänzen sowie vollständig ergänzte Stapelbilder durch die Transportbahn abtransportieren zu lassen.

Bevorzugte Ausgestaltungen der Erfindung finden sich in den abhängigen Ansprüchen. Insbesondere richtet sich die Erfindung auch auf eine Anlage nach den Ansprüchen 8, 9 und 10.

Ein wesentliches Element der vorbekannten Zusammenstellvorrichtung ist ein sowohl vertikal als auch horizontal und quer zu der Transportrichtung des Transportbandes verfahrbarer Etagenspeicher. Es hat sich jedoch herausgestellt, dass dieser Etagenspeicher zumindest bei einigen Anwendungsfällen aufgrund der Kombination der horizontalen und vertikalen Verstellbarkeit unter Berücksichtigung der insgesamt einschließlich der Formatzuschnitte relativ großen Masse einen nicht ganz unerheblichen konstruktiven Aufwand bedingt. Dies gilt insbesondere dann, wenn er mit relativ kurzen Taktzeiten betrieben werden soll. Die durch die vorliegende Erfindung vorgeschlagene Alternative besteht darin, den Etagenspeicher nunmehr ausschließlich vertikal verstellbar auszugestalten, im Übrigen aber mit vergleichbaren Funktionen zu betreiben wie in dem zitierten Stand der Technik. Zum Zusammenstellen der Stapelbilder wird dann ergänzend ein in der Transportebene in der Nähe des Etagenspeichers angeordnetes Transportbahnstück eingesetzt, das quer zur Transportrichtung horizontal verstellbar ist. Die horizontale Verstellbarkeit und die vertikale Verstellbarkeit treten also apparativ getrennt auf.

Der wesentliche Vorteil liegt in der konstruktiven Vereinfachung des Etagenspeicheraufbaus. Dies gilt insbesondere auch für den Fall, dass eine gleichzeitige Betätigung der vertikalen und horizontalen Verstellbarkeit gewünscht ist. Dies ist bei der vorliegenden Erfindung besonders einfach zu realisieren, weil es sich um getrennte Vorrichtungsteile handeln kann.

Die von der Transportbahn angelieferten Stapelbildteile werden also in die verschiedenen Etagen des Etagenspeichers eingefahren und in diesen Etagen bis zur Herstellung von vollständigen Stapelbildern zwischengelagert. Dabei muss nicht notwendigerweise eine feste Zuordnung zwischen Stapelbildern und Etagen vorliegen. Je nach Auslegung könnten im Übrigen eine Mehrzahl der Etagen auch gleichen Stapelbildern zugeordnet sein. Jedenfalls dann, wenn beim Zusammenstellen eines Stapelbildes, also beim Anfügen eines Stapelbildteils an ein in einer Etage bereits vorhandenes Stapelbildteil, eine Querverstellung notwendig ist, wird die Funktion der Querverstellung des erwähnten Transportbahnstückes eingesetzt. Dementsprechend muss der Etagenspeicher ausschließlich vertikal verstellt werden, um die "gerade aktive" Etage in die Transportebene der Transportbahn zu bringen.

Übrigens ist es nicht in jedem Fall notwendig, nach einem Einfahren eines unvollständigen Stapelbildteils in eine Etage in der Transportebene den Etagenspeicher vertikal zu verstellen, um diese Etage aus der Transportebene herauszubewegen. Wenn etwa der EDV-Steuerung einer Gesamtanlage in Folge des bekannten Schnittplans und der bekannten Vereinzelung der Formatzuschnitte aus dem Schnittplan bekannt ist, dass ein weiteres Stapelbildteil folgt, das mit dem gerade eingefahrenen Stapelbildteil zusammenpasst, so kann die Vertikalverstellung des Etagenspeichers auch unterbleiben.

Umgekehrt muss das Zwischenlagern in dem Etagenspeicher nicht immer mit unvollständigen Stapelbildern verknüpft sein. Mit Rücksicht auf den Betrieb einer nachgeschalteten Stapelanlage kann es aus bestimmten Gründen auch interessant sein, den Etagenspeicher zwischenzeitlich als Pufferspeicher für vollständige Stapelbilder zu verwenden. Dies wird jedoch nur in Ausnahmefällen von Interesse sein.

Dabei kann das horizontal verstellbare Transportbahnstück im Prinzip im Sinn der Transportrichtung vor oder hinter dem Etagenspeicher liegen. Bevorzugt ist jedoch, dass es vor dem Etagenspeicher liegt, also stromaufwärts davon. Dies hat den Vorteil, dass beim Zusammenstellen der Stapelbilder in den Etagen des Etagenspeichers nach einer Quereinstellung eines zu ergänzenden Stapelbildteils keine Rückwärtsfahrt anfällt und somit ein zeitoptimierter Verfahrensablauf gewählt werden kann.

Die Herstellung der Stapelbilder erfolgt vorzugsweise in der (gerade in die Transportebene geschalteten) Etage des Etagenspeichers. Stapelbildteile werden von dem Transportbahnstück bei geeigneter Quereinstellung in die in die Transportebene geschaltete Etage des Etagenspeichers eingefahren, um in dem Etagenspeicher das Stapelbild fertig zu stellen. Die Quereinstellung kann beim Zwischenlagern durch entsprechende Einstellung des Transportbahnstücks beim Einfahren in den Etagenspeicher zum Zusammenstellen des Stapelbildes bzw. größerer Stapelbildteile erfolgen. Die Erfindung profitiert von der Aufteilung der beiden Bewegungskomponenten (vertikal und quer horizontal) auf den Etagenspeicher und das Transportbahnstück.

Die Stapelbilder entstehen dabei in den Etagen des Etagenspeichers entstehen, also beim Anfügen eines Stapelbildteils an ein anderes in einer Etage des Etagenspeichers. Vollständige Stapelbilder werden aus den Etagen ausgefahren. Eine einfache und bewährte Lösung für den Transport der Formatzuschnitte über die Transportbahn einschließlich des querverstellbaren Transportbahnstücks und innerhalb der Etagen des Etagenspeichers sind Rollenbahnelemente, aber auch Riemenbahnelemente. Es kann sich dabei um freilaufende Rollen handeln. Sowohl angetriebene als auch nicht angetriebene Rollen sind denkbar, wobei bei nichtangetriebenen Rollen ergänzende Antriebsvorrichtungen, beispielsweise in Transportrichtung arbeitende Schieber und dergleichen vorgesehen sein könnten. Vorzugsweise sind die Rollenbahnstücke in den Etagen des Etagenspeichers jeweils etagenweise unabhängig voneinander antreibbar und mit freilaufenden Rollen versehen.

Das Zusammenstellen von Stapelbildern ist dabei nicht so zu verstehen, dass durch das Zusammenstellen nicht mehr als ein Stapelbild erzeugt werden darf. Vielmehr kann es von Vorteil sein, auch Stapelbilder in über das Stapelbild hinausgehenden Zuschnittgruppen zusammenzustellen, also zumindest ein vollständiges Stapelbild enthaltende Gruppen. In diesem Sinne sind die obigen Ausführungen zum Zusammenstellen zu verstehen. Dabei können die über das vollständige Stapelbild hinausgehenden Anteile der Gruppe beispielsweise beim Ausfahren aus der erfindungsgemäßen Zusammenstellvorrichtung von dem Stapelbild abgeteilt werden und entweder in dem entsprechenden Stockwerk der Zusammenstellvorrichtung für einen weiteren Zusammenstellvorgang verbleiben oder auch selbst ausgefahren werden, beispielsweise weil sie selbst wiederum ein eigenes Stapelbild ergeben.

Man kann sich leicht verdeutlichen, dass die Erfindung bereits von Vorteil ist, wenn überhaupt nur ein Stapelbildtyp auftritt, z. B. soweit dieser als inhomogenes Stapelbild dabei aus verschiedenen Formatzuschnitten zusammengestellt werden muss. Dabei kann es vorkommen, dass wegen des Schnittplans eine gewisse Zahl von gleichartigen Formatzuschnitten direkt nacheinander an der Zusammenstellvorrichtung ankommt. Hier bietet die erfindungsgemäße Zusammenstellvorrichtung den Vorteil, dass bei ausreichender Zahl von Stockwerken diese gleichartigen Formatzuschnitte auf mehrere gleichartige Stapelbilder verteilt werden können.

Um so mehr bewährt sich die Erfindung bei verschiedenen Stapelbildern, die mit der Zusammenstellvorrichtung zeitlich verschränkt zusammengestellt werden können.

Für den besonderen Fall eines sich aus dem Schnittplan ergebenden vollständigen Stapelbildes sieht die Erfindung in einer besonderen Ausgestaltung vor, ein weiteres, jedoch nicht unbedingt fest definiertes, Stockwerk nicht der Positionierung von Formatzuschnitten oder Formatzuschnittgruppen und Lagerung bis zur Fertigstellung von Stapelbildern zuzuweisen, sondern grundsätzlich als "Durchfahrebene" freizuhalten. Dann können einfahrende vollständige Stapelbilder praktisch ohne Zeitverzögerung direkt durch die Zusammenstellvorrichtung hindurchgeschleust werden. In einem Sonderfall gilt dies für 1x1-Stapelbilder, die nur aus einem einzigen Formatzuschnitt bestehen.

Nach einer weiteren bevorzugten Ausgestaltung weist jedes der Stockwerke eine eigene separate Transporteinrichtung für den horizontalen Transport der Formatzuschnitte entlang des Wegs der Transportbahn innerhalb der Zusammenstellvorrichtung auf. Damit entfallen die bei einer für alle Stockwerke gemeinsamen Transportvorrichtungen in irgendeiner Weise erforderlichen Aus- und Einkopplungsvorgänge beim Verschieben und damit Umschalten der Stockwerke in und aus der Transportbahn. Somit kann das Umschalten zwischen verschiedenen Stockwerken möglichst schnell und einfach vonstatten gehen. Ein besonders bevorzugter Fall sind die bereits erwähnten Rollenbahnen.

Vorzugsweise sind die Rollen der Rollenbahnen sogenannte Freilaufrollen, die bei Anliegen eines bestimmten Drehmoments zwischen ihrer Antriebsachse und ihrem mit den Formatzuschnitten in Berührung stehenden Umfang gegenüber der Antriebsachse drehbar sind, also "durchrutschen". Damit können Formatzuschnitte und Formatzuschnittgruppen transportiert und dabei ohne punktgenaues Anhalten des Rollenantriebs einfach durch Gegenfahren der Formatzuschnitte gegen einen Anschlag positioniert werden.

Dieser Anschlag kann als einheitlicher Anschlag der gesamten Zusammenstellvorrichtung für alle Stockwerke gemeinsam in der Ebene der Transportbahn angeordnet sein und stockwerkunabhängig zur Justage beim Positionieren und zum in Transportrichtung gegeneinander Fahren der Formatzuschnitte und -gruppen und damit Zusammenstellen von Schnittbildern verwendet werden.

Die Hubeinrichtung zum vertikal Verschieben der Stockwerke ist vorzugsweise durch eine Arretiervorrichtung unterstützt, die das jeweils in der Transportbahnebene befindliche Stockwerk arretiert und auf die Transportbahnebene justiert. Vorzugsweise ist diese Arretiervorrichtung pneumatisch angetrieben.

Wie weiter oben bereits festgestellt, bezieht sich die Erfindung nicht nur auf die beschriebene Zusammenstellvorrichtung an sich, sondern vielmehr auch auf eine Anlage zum Zusammenstellen und Abstapeln von Stapelbildern. Diese Anlage enthält neben der bereits beschriebenen Zusammenstellvorrichtung eine nachgeschaltete Stapelvorrichtung, die die fertigen Stapelbilder zu Stapeln aufschichtet. Erfindungsgemäß ist hierbei vorgesehen, in der Stapelvorrichtung mehrere selbständig arbeitende Stapelplätze vorzusehen, die also ohne Rücksicht auf den Betriebszustand des anderen Stapelplatzes ihren Betrieb ausführen können. Dabei sollte die Zahl der Stapelplätze möglichst der Zahl der Stockwerke der Zusammenstellvorrichtung entsprechen, wobei jedoch die Durchfahrebene nicht mitzurechnen ist (d.h. Etagenanzahl = Stapelplätze + 1). Dies ist von Vorteil für den Fall, dass jedes der Stockwerke der Zusammenstellvorrichtung einem bestimmten Stapelbildtyp entspricht, der dann in einem ihm zugeordneten Stapelplatz abgestapelt wird. Diese Zuordnungen müssen nicht zeitlich konstant sein. Sie können zum Optimieren des Verfahrens, auch im Betrieb, geändert werden. Das gilt auch für die Funktion eines Stockwerks als Durchfahrebene. Dieses Durchfahrstockwerk muss sich konstruktiv nicht von den Lagerstockwerken unterscheiden und kann, auch während des Betriebs, gewechselt werden.

Eine konkrete Möglichkeit für die Ausgestaltung eines erfindungsgemäßen Stapelplatzes liegt in einem Hubtisch, beispielsweise einer hydraulischen Scherenhebebühne, der von einem die Stapelbilder tragenden Rechen bedient wird. Dazu kann der Rechen die Stapelbilder z. B. von einer Rollentransportbahn abheben, indem er mit seinen Zinken zwischen den Rollen hochgefahren wird, in der das Stapelbild tragenden angehobenen Stellung zu dem Hubtisch verfahren wird, und dort das Stapelbild ablegt. Der Hubtisch wiederum kann ebenfalls eine Transporteinrichtung aufweisen, um den fertigen Stapel ausfahren zu können.

Eine weitere Ausgestaltung der Erfindung ist in Anspruch 9 angegeben. Bei dieser Ausgestaltung kommt eine Drehvorrichtung hinzu, die für eine normgerechte Ausrichtung der Formatzuschnitte innerhalb der Ebene der Formatzuschnitte sorgt. Dabei ist vorgesehen, dass die Drehvorrichtung auch zum Drehen von Formatzuschnittgruppen ausgelegt ist, die über ein Stapelbild hinausgehen. Dies bedeutet nicht, dass im Betrieb alle gedrehten Gruppen tatsächlich größer als das jeweilige Stapelbild sein müssen. Vielmehr ergibt sich ein Vorteil bereits dann, wenn die Drehvorrichtung zum einen im Hinblick auf ihre geometrische Kapazität, d. h. auf die maximal zulässigen Abmessungen der gesamten Gruppe, in zumindest einer Richtung über ein Stapelbild hinausgeht. Dementsprechend muss eine Vereinzeleinrichtung nachgeschaltet sein, die aus den über ein Stapelbild hinausgehenden Formatzuschnittgruppen Stapelbildelemente für die weiter oben beschriebene Zusammenstellvorrichtung bzw. auch ganze Stapelbilder erzeugt.

Dieser Ausgestaltung liegt dabei die Erkenntnis zugrunde, dass der Betrieb der Drehvorrichtung innerhalb der Gesamtanlage - auch unter Berücksichtigung der Aufteilanlage - häufig ein zeitbegrenzendes bzw. durchsatzbegrenzendes Element bildet. Es kann insoweit insgesamt ökonomisch sein, zugunsten einer schnelleren Betriebsweise der Drehvorrichtung an anderer Stelle eine geringfügige Verkomplizierung des Anlagenbetriebs in Kauf zu nehmen.

Die Erfindung bezieht sich insbesondere auf eine Anlage, bei der die Drehvorrichtung zum Drehen von in der Transportrichtung des Ausfahrens aus der Drehvorrichtung über ein Stapelbild hinausgehenden Gruppen ausgelegt ist und die Vereinzelvorrichtung diese Gruppen beim Ausfahren aus der Drehvorrichtung vereinzelt.

Zu den vorstehend skizzierten Ausführungsformen mit einer Drehvorrichtung und weiteren Vorteilen und Merkmalen dieses Aspektes der Erfindung wird auf eine speziell hierauf gerichtete Patentanmeldung 199 08 983 derselben Anmelderin mit dem Titel: "Anlage zum Zusammenstellen und Abstapeln von Stapelbildern mit Drehvorrichtung" verwiesen. Der Offenbarungsgehalt dieser Anmeldung ist hiermit ausdrücklich in Bezug genommen.

Zu weiteren Einzelheiten der vorstehend erläuterten Aspekte der Erfindung wird weiterhin auf die folgenden konkreten Ausführungsbeispiele verwiesen. Dabei im einzelnen offenbarte Merkmale können auch in anderen als den dargestellten Kombinationen erfindungswesentlich sein.

Im einzelnen zeigt:
Figur 1 eine Seitenansicht einer erfindungsgemäßen Anlage als erstes Ausführungsbeispiel;
Figur 2 eine Draufsicht auf die Anlage nach Figur 1;
Figur 3 eine Seitenansicht einer erfindungsgemäßen Anlage als zweites Ausführungsbeispiel;
Figur 4 eine Draufsicht auf die Anlage nach Figur 3.

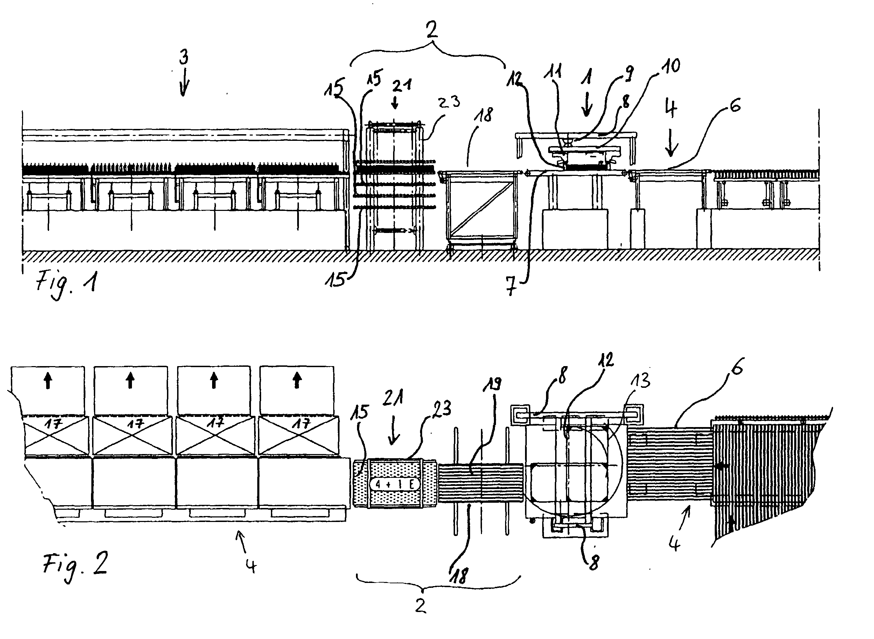

Figur 1 zeigt in einer Seitenansicht eine erfindungsgemäße Anlage zum Zusammenstellen und Abstapeln von Stapelbildern aus Formatzuschnitten mit einer einer Zusammenstellvorrichtung vorgeschalteten Drehvorrichtung. Mit 1 ist die Drehvorrichtung bezeichnet, mit 2 die Zusammenstellvorrichtung und mit 3 die Stapelvorrichtungen. Die Transportrichtung ist in allen Figuren von rechts nach links und wird mit X-Richtung bezeichnet. Der Drehvorrichtung 1 vorgeschaltet ist ein Stück einer Transportbahn 4 mit angetriebenen Transportriemen 6, die parallel nebeneinander und jeweils in der Transportrichtung angeordnet sind. Die Transportbahn 4 definiert eine Transportebene auf der sich in Transportrichtung ein durchgehender einstückiger Transportgurt 7 der Drehvorrichtung 1 anschließt. Die Höhen der Transportbahn 4 und des Gurtes 7 der Dreheinrichtung sind durch geeignete Tragsäulen, die in Fundamenten gehalten sind, vorgegeben, wodurch jeweils von den Riemen 6 bzw. dem Gurt 7 bedeckte Transporttische gebildet sind.

Stromaufwärts (bezüglich der Transportrichtung) von der Eingangstransportbahn 4 der dargestellten Anlage, d. h. in den Figuren rechts anschließend, befindet sich eine Anlage, die mehrlagige Produktionsformate des Plattenmaterials, hier Möbelbauplatten aus einer Presse, mit einer Aufteilsäge gemäß einem Schnittplan in mehrlagige Formatzuschnitte aufteilt, mit Besäumeinrichtungen die Formatzuschnitte besäumt und über an sich bekannte Vereinzelvorrichtungen die Schnittpläne in geeigneter Weise in Formatzuschnittgruppen vereinzelt, die an der Transportbahn 4 der hier beschriebenen Anlage ankommen.

Der Vergleich der Figuren 1 und 2 zeigt, dass der Transporttisch der Drehvorrichtung 1 von einer Brückenkonstruktion 8 überspannt ist. In etwa über der Mitte des Transporttisches der Drehvorrichtung 1 weist die Brückenkonstruktion 8 ein nach unten weisendes Drehgelenk 9 auf, das einen Drehteil 10 der Drehvorrichtung 1 parallel zu der Transportebene drehbar hält. Der Drehteil 10 weist Halterungen 11 mit Kniehebelbacken 12 auf. Dabei erstrecken sich die Kniehebelbacken 12, wie Figur 2 zeigt, quer zur Transportrichtung über den größten Teil der Breite des Transporttisches der Drehvorrichtung 1. In gestrichelten Linien ist angedeutet, dass die in den Figuren linke Kniehebelbacke 12 mit Halterung 11 in Transportrichtung verschiebbar und somit auf verschiedene Abstände von der gegenüberliegenden Kniehebelbacke einstellbar ist.

Die Kniehebelbacken sind pneumatisch klappbar, wobei Figur 1 den heruntergeklappten Zustand zeigt. In dem in Figur 1 dargestellten heruntergeklappten Zustand halten die Kniehebelbacken 12 eine Formatzuschnittgruppe 13 zwischen sich, die in Figur 2 in der Draufsicht dargestellt ist. In diesem Zustand bewirkt eine Drehung des Drehteils 10 um das Gelenk 9 eine über den Transportgurt 7 gleitende Drehung der Formatzuschnittgruppe 13, und zwar um 90°. Die spezielle Konstruktion der Kniehebelbacken 12 sorgt dafür, dass in dem in den Figuren 1 und 2 dargestellten Zustand von den Kniehebelbacken 12 relativ große Kräfte aufgenommen werden können, ohne dass der pneumatische Antrieb deswegen besonders stark (und damit schwer) ausgeführt sein müsste.

Die Verstellbewegung der linken Halterung 11 mit der linken Kniehebelbacke 12 erfolgt über einen Servomotor, dessen Drehmoment einstellbar ist. Dies hat den Vorteil, dass infolge der Größe der Formatzuschnittgruppe 13 die Kräfte einstellbar sind.

Die Drehbewegung des Drehteils ist über einen Kurbeltrieb an einen frequenzgeregelten Drehstrommotor gekoppelt, der den Kurbeltrieb zwischen den beiden Wendepunkten hin und her bewegt. Durch die geometrischen Verhältnisse des Kurbeltriebs ergibt sich eine über den Verlauf der Drehbewegung veränderliche Übersetzung zwischen dem Drehstrommotor und dem Drehteil 10, wobei am Anfang und am Ende der Bewegung automatisch ein Abbremsen in geringere Geschwindigkeiten erfolgt. Denkbar sind auch andere Antriebsarten.

An die Drehvorrichtung 1 schließt die Zusammenstellvorrichtung 2 an. Die Zusammenstellvorrichtung 2 beinhaltet neben dem die Stockwerke 15 beinhaltenden Etagenspeicher 21 außerdem stromaufwärts von diesem ein in der Y-Richtung quer verfahrbares Transportbahnstück 18. Dieses ist, wie Figur 2 zeigt, auf am Boden montierten Schienen zu beiden Seiten der Y-Richtung verfahrbar. Dadurch können aus der Drehvorrichtung 1 ausgefahrene Formatzuschnitte oder Formatzuschnittgruppen bereits beim Ausfahren aus der Drehvorrichtung 1 in das verfahrbare Transportbahnstück 18 und des Weiteren auch beim Ausfahren aus dem Transportbahnstück 18 in eine der Etagen 15 des Etagenspeichers auf beliebige Y-Positionen der Transportbreite der Transportbahn 4 eingestellt werden. Das Transportbahnstück 18 ist dabei ein mit Transportriemen 19 versehener Tisch, der auf den bereits erwähnten Schienen in Y-Richtung verfahrbar ist. Die Transportriemen 19 sind in der Transportrichtung (X) angeordnet und liegen in Y-Richtung nebeneinander und sind natürlich motorisch antreibbar.

Figur 1 zeigt, dass in weiterer Transportrichtung der Etagenspeicher 21 mit mehreren jeweils eine Rollenbahn mit Freilaufrollen bildenden Stockwerken 15 folgt. Die Freilaufrollenbahnen jedes der Stockwerke 15 weisen quer zur Transportrichtung durchgehende Achsen mit Antriebsritzeln auf, die über eine Kette von einem Servomotor antreibbar sind. Dabei sind in der Figur fünf Stockwerke eingezeichnet, wobei jedoch tatsächlich auch größere Anzahlen von Stockwerken verwendet werden können.

Der Zusammenstellvorrichtung 2 nachgeschaltet ist eine Stapelvorrichtung 3 mit vier Stapelplätzen. Die Stapelplätze entsprechen jeweils einem der Stockwerke, wobei das verbleibende Stockwerk, wie bereits ausgeführt, als Durchfahrebene für fertige Stapelbilder dient. Vorzugsweise ist dies das mittlere Stockwerk. Diese Zuordnungen sind während des Betriebs nicht zeitlich konstant.

Die Stockwerke 15 sind in einem Gestell 23 gehalten, indem sie miteinander und in festem Abstand zueinander über einen Servomotor oder einen hochpoligen Drehstrommotor und damit geschwindigkeitsregelbar mit einem Kettenantrieb in der Höhe verfahrbar sind. Sie könnten beispielsweise auch auf einer Hebebühne aufgebaut sein. Diese Höhenverstellung wird im Folgenden mit Z-Verstellung bezeichnet. Gleichzeitig ist das Gestell 23 quer und längs zur Transportrichtung fest. Die Quer- Richtung wird im Folgenden als Y-Richtung bezeichnet.

Die Stapelplätze 17 wiederum weisen jeweils einen nicht im einzelnen eingezeichneten, jedoch zwischen den Rollenbahnen der Transportbahn 4 (in der Transportrichtung) auf der Höhe der Stapelplätze versenk- und hebbaren Rechen auf, der Formatzuschnittgruppen von der Transportbahn 4 abheben und auf Hubeinrichtungen, vorzugsweise hydraulische Scherenhebebühnen, ablegen kann, die jeweils eine nicht eingezeichnete Vorrichtung zum Weitertransport der Stapel aufweisen. Dabei können die Höhenniveaus der Hubeinrichtungen gerade so eingestellt werden, dass der Transportrechen ein Stapelbild auf den Stapel legen bzw. darauf abstreifen kann. Hierzu ist ein bewegbarer Anschlag vorgesehen und sind die Zinken des Rechens so ausgeführt, dass beim Abstreifen keine Beschädigungen auftreten.

Bezüglich der Funktionsweise der Drehvorrichtung 1, der Zusammenstellvorrichtung 2 und der übrigen Teile der dargestellten Anlage wird zunächst auf die bereits eingangs zitierte Voranmeldung DE 199 09 001 verwiesen. Die dortigen Ausführungsbeispiele sind auf die vorliegende Erfindung mit dem einzigen Unterschied übertragbar, dass die dort gegebene Y-Verstellung des Etagenspeichers 21 entfällt und stattdessen das zusätzliche Transportbahnstück 18 in Y-Richtung verstellt wird. Wenn man also annimmt, dass in einer Etage 15 des Etagenspeichers 21 bereits ein Teil eines Stapelbildes gelagert ist und ein fehlendes Teil in Y-Richtung an dieses Teil angefügt werden soll, so war es bei der früheren Erfindung notwendig, den Etagenspeicher 21 entsprechend beispielsweise in Transportrichtung nach links zu verfahren, um den Rest des Stapelbildes an den bereits in der Etage 15 vorhandenen Teil anlegen zu können. Bei der vorliegenden Erfindung wird stattdessen nach dem Ausfahren des zweiten Teils des Stapelbildes aus der Drehvorrichtung 1 in das quer verfahrbare Transportbahnstück 18 letzteres um die entsprechende Strecke in Transportrichtung nach rechts verschoben, woraus sich für die relative Lage zwischen den beiden Teilen des Stapelbildes die selben Konsequenzen ergeben.

In diesem Sinn sind sämtliche in der Voranmeldung im Einzelnen erläuterten Beispiele übertragbar. Insbesondere wird hier die besondere Funktionsweise der Drehvorrichtung 1, die über ein Stapelbild hinausgehende Formatzuschnittgruppen drehen kann, nicht noch einmal dargestellt, sondern stattdessen verwiesen.

(Ein weiterer, jedoch nicht prinzipieller Unterschied besteht darin, dass bei den Ausführungsbeispielen der Voranmeldung von zwei Stapelplätzen 17 und dementsprechend zwei als Zwischenlager dienenden Stockwerken 15 des Etagenspeichers 21 ausgegangen wurde, wobei bei der vorliegenden Erfindung stattdessen vier Stapelplätze 17 und vier Etagen 15 plus Durchfahretage vorliegen.)

Insgesamt können sowohl beim Ausfahren aus der Drehvorrichtung 1 in das quer bewegliche Transportbahnstück 18 als auch beim Ausfahren aus Letzterem in eine Etage 15 des Etagenspeichers 21 sowie schließlich beim Ausfahren aus einer Etage 15 Vereinzelungen in X-Richtung vorgenommen werden, etwa wenn die Drehvorrichtung 1 eine über ein Stapelbild hinausgehende Formatzuschnittgruppe gedreht hat. In gleicher Weise können an diesen Stellen auch Zusammenstellvorgänge in X-Richtung vorgenommen werden. Zusammenstellvorgänge in Y-Richtung verwenden die Y-Verstellbarkeit des Transportbahnstücks 18, wobei schon beim Ausfahren aus der Drehvorrichtung 1 in das Transportbahnstück 18 als auch beim Ausfahren aus dem Transportbahnstück 18 in eine Etage 15 und wiederum beim Ausfahren aus einer Etage 15 in das Transportbahnstück 18 (also in Rückwärtsrichtung) zusammengestellt werden kann. Es können also insbesondere sowohl die Etagen 15 als auch das Transportbahnstück 18 zum Zusammenstellen dienen. Bevorzugt ist jedoch die Verwendung der Etagen 15.

Die im vorliegenden Beispiel vorhandenen fünf Etagen 15 des Etagenspeichers sind mit vier Etagen jeweils den Stapelplätzen 17 zugeordnet, wobei die verbleibende mittlere Etage 15 als Durchfahrebene dient. Das bedeutet, dass auf den jeweiligen Etagen 15 die an dem jeweiligen Stapelplatz 17 abzustapelnden Stapelbilder in Teilen zwischengelagert und zusammengestellt werden.

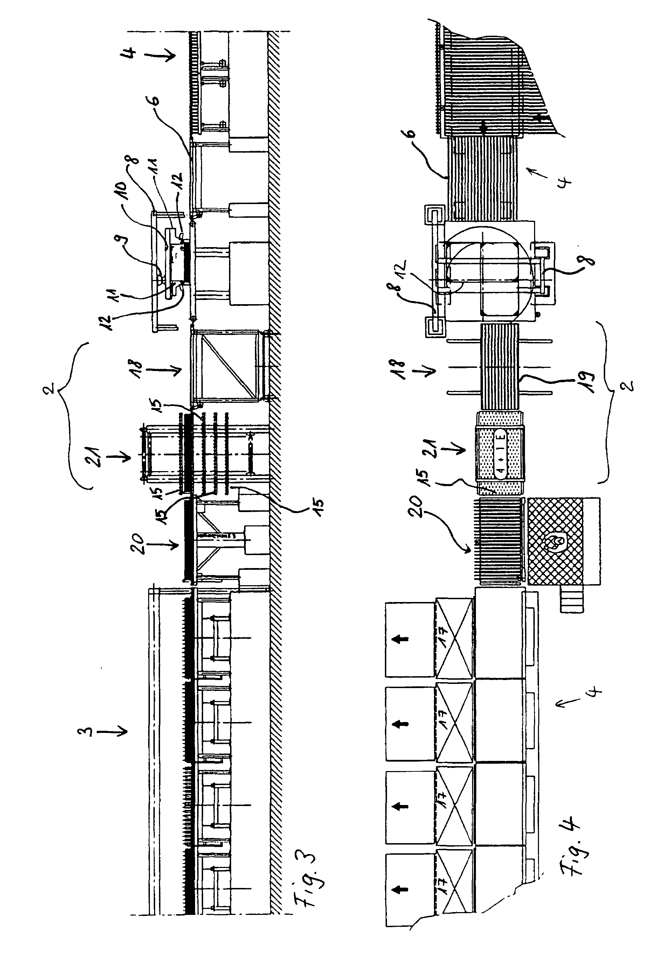

Die Figuren 3 und 4 zeigen ein zweites Ausführungsbeispiel, das sich von dem ersten Ausführungsbeispiel aus den Figuren 1 und 2 nur dadurch unterscheidet, dass zwischen die Stapelplätze 17 und den Etagenspeicher der Zusammenstellvorrichtung 2 ein Handausgleichsplatz 20 zwischengeschaltet ist.

Der Handausgleichsplatz 20 dient dazu, unvollständige und vollständige Lagen von Stapelbildern mit unterschiedlichen Schichtungshöhen der Formatzuschnittpakete händisch auszugleichen. Dazu wird der Stapel aus dem Transportniveau in vertikaler Richtung mit einer Hubvorrichtung soweit ausgehoben, dass nachfolgende abzustapelnde Stapelbilder ohne Stopp den Handausgleichsplatz passieren können, während der Bediener auf der angehobenen Ebene das Stapelbild manuell ausgleicht.

## Patentansprüche

1. Vorrichtung (2) zum Zusammenstellen von Stapelbildern aus Formatzuschnitten aus Platten mit:
- einem Etagenspeicher (21) mit einer Mehrzahl übereinander angeordnete Etagen (15),
die jeweils durch eine Vertikalverstellung des Etagenspeichers (21) in eine Transportebene (4) gebracht werden können und
in die und aus denen in der Transportebene (4) Formatzuschnitte zum Zwischenlagern und Zusammenstellen von vorgegebenen Stapelbildern in einer Transportrichtung ein- und ausfahrbar sind, und
- einem in der Transportebene (4) quer zu der Transportrichtung (X) horizontal verstellbaren Transportbahnstück (18),
wobei die Vorrichtung (2) dazu ausgelegt ist,
- Stapelbildteile, die antransportiert werden, durch Einfahren in eine der Etagen (15) und vertikales Verstellen des Etagenspeichers (21) zwischenzulagern
- und bei Anlieferung ergänzender Stapelbildteile durch diese zu ergänzen
- sowie vollständig ergänzte Stapelbilder abtransportieren zu lassen.

2. Vorrichtung (2) nach Anspruch 1, bei der das horizontal (Y) verstellbare Transportbahnstück (18) dem Etagenspeicher (21) im Sinn der Transportrichtung (X) vorgeschaltet ist.

3. Vorrichtung (2) nach Anspruch 1 oder 2, mit einem zwischen der Zusammenstellvorrichtung und einer Stapelvorrichtung (3) vorgesehenen Handausgleichsplatz (20) mit einer Hubeinrichtung zum Anheben von Formatzuschnitten aus der Transportebene (4) zur Schaffung einer Durchfahrmöglichkeit für nachfolgende Stapelbilder.

4. Vorrichtung (2) nach einem der vorstehenden Ansprüche, bei der jeweils der Etagenspeicher (21) in jeder Etage (15) und das horizontal verstellbare Transportbahnstück (18) Rollenbahnstücke aufweisen.

5. Vorrichtung (2) nach einem der vorstehenden Ansprüche, die dazu ausgelegt ist, antransportierte vollständige Stapelbilder durch eine eigens hierfür vorgesehene zusätzliche Etage (15) durchfahren zu lassen.

6. Vorrichtung (2) nach einem der vorstehenden Ansprüche, bei der jede der Etagen (15) eine separate Transporteinrichtung für den Transport der Formatzuschnitte in der Transportrichtung (X) aufweist.

7. Vorrichtung (2) nach einem der vorstehenden Ansprüche mit einem etagenunabhängigen, hebbaren und senkbaren Anschlag zur Justage und zum in Transportrichtung (X) Zusammenstellen von Stapelbildern.

8. Anlage zum Zusammenstellen und Abstapeln von Stapelbildern aus Formatzuschnitten von Platten mit
einer Vorrichtung (2) nach einem der vorstehenden Ansprüche,
und einer nachgeschalteten Stapelvorrichtung (3) zum Abstapeln fertiger Stapelbilder zu Stapeln mit einer der Zahl der Etagen (15) der Zusammenstellvorrichtung (2) entsprechenden Zahl von selbständig arbeitenden Stapelplätzen (17).

9. Anlage zum Zusammenstellen und Abstapeln von Stapelbildern aus Formatzuschnitten von Platten mit
einer Vorrichtung (2) nach einem der Ansprüche 1 - 7
und einer vorgeschalteten Vorrichtung (1) zum Drehen einer Gruppe der Formatzuschnitte in der Ebene der Formatzuschnitte, wobei die Drehvorrichtung (1) dazu ausgelegt ist, die Gruppe zu drehen, wenn die Gruppe nicht der im Stapelbild vorgehobenen Ausrichtung (X) in der Ebene der Formatzuschnitte entspricht,
und einer der Zusammenstellvorrichtung (2) nachgeschalteten Vorrichtung (3) zum Abstapeln von Stapelbildern zu Stapeln,
wobei die Drehvorrichtung (1) dazu ausgelegt ist, Gruppen von Formatzuschnitten zu drehen, die auch in einer Richtung über ein Stapelbild hinausgehen können.
und die Anlage eine Einrichtung (7, 15, 18) zum Vereinzeln der Gruppen in der zumindest einen Richtung (X) zur Erzeugung von Stapelbildern oder Stapelbildteilen aus den über ein Stapelbild hinausgehenden Gruppen aufweist.

10. Anlage nach Anspruch 8 in Verbindung mit Anspruch 9.

## Claims

1. An apparatus (2) for collating stack patterns from cut-to-size pieces of boards, having:
- a rack store (21) having a plurality of rack storeys (15) one above the other,
wherein each rack storey can be brought into a transport level (4) by vertically positioning said rack store (21) and
wherein cut-to-size pieces can be moved into and out of said rack storeys in said transport level (4) for intermediate storing and collating of predefined stack patterns, and
- a transport conveyor line portion (18) being horizontally positionable in said transport level (4) transversely to said transport direction (X),
said apparatus (2) being adapted to
- intermediately store delivered stack pattern portions by moving them into one of said rack storeys (15) and by vertically positioning said rack store (21)
- and to supplement said stack pattern portions in case of delivery of supplementary stack pattern portions by these supplementary stack pattern portions
- and transporting completely supplemented stack patterns away.

2. An apparatus (2) according to claim 1, in which said horizontally (Y) positionable transport conveyor line portion (18) is connected upstream of said rack store (21) with regard to said transport direction (X).

3. An apparatus (2) according to claim 1 or 2, having a manual compensation station (20) being provided between said collating apparatus and a stacking device (3) and comprising a lifting device for lifting cut-to-size pieces from said transport level (4) for enabling succeeding stacking patterns to be moved through.

4. An apparatus (2) according to one of the preceding claims, wherein said rack store (21), in each rack storey (15), and said horizontally positionable transport conveyor line portion (18) comprise roller conveyor portions.

5. An apparatus (2) according to one of the preceding claims, being adapted to enable delivered complete stacking patterns to be moved through an additional rack storey (15) especially provided therefore.

6. An apparatus (2) according to one of the preceding claims, wherein each of said rack storeys (15) comprises a separate transport device for transporting said cut-to-size pieces in said transport direction (X).

7. An apparatus (2) according to one of the preceding claims, having a liftable and lowerable stop for adjusting and collating stacking patterns in said transport direction (X), which stop is independent of that rack storeys.

8. An installation for collating and stacking stack patterns of cut-to-size pieces of boards, having
an apparatus (2) according to one of the preceding claims,
and a downstream connected stacking device (3) for stacking complete stacking patterns into stacks and comprising a number of autonomously working stacking stations (17) corresponding to the number of rack storeys (15) of said collating apparatus (2).

9. An installation for collating and stacking stack patterns of cut-to-size pieces of boards, having
an apparatus (2) according to one of claims 1 - 7,
and a upstream connected device (1) for rotating a group of cut-to-size pieces in the plane of said cut-to-size pieces, said rotating device (1) being adapted to rotate said group in case that said group does not correspond to said alignment (X) in said plane of said cut-to-size pieces as defined in the stacking pattern,
and a device (3) for stacking stacking patterns into stacks being connected downstream of said collating device (2),
wherein said rotating device (1) is adapted to rotate groups of cut-to-size pieces that can extend over a stacking pattern in a direction
and wherein said installation comprises a device (7, 15, 18) for separating said groups in said direction (X) for providing stacking patterns or stacking pattern portions from said groups extending over a stacking pattern.

10. An installation according to claim 8 and claim 9.

## Revendications

1. Dispositif (2) de formation d'ensembles de formats découpés des panneaux comprenant :
- un magasin à étages (21) comprenant une pluralité d'étages (15) disposés les uns au-dessus des autres,
lesquels peuvent respectivement être amenés dans un plan de transport (4) par un positionnement vertical du magasin à étages (21),
dans lesquels et depuis lesquels des formats découpés peuvent entrer et sortir dans le plan de transport (4) dans une direction de transport en vue de leur stockage temporaire et de leur formation en ensembles prédéfinis,
- un tronçon de convoyeur de transport (18) pouvant être positionné dans le sens horizontal dans le plan de transport (4) transversal par rapport à la direction de transport (X),
le dispositif (2) étant conçu pour
- effectuer le stockage temporaire des parties d'ensembles qui sont amenés en pénétrant dans l'un des étages (15) et en positionnant le magasin à étages (21) dans le sens vertical,
- et les compléter par des parties d'ensembles complémentaires lors de la livraison de ceux-ci,
- ainsi que faire emporter les ensembles entièrement complétés.

2. Dispositif (2) selon la revendication 1, avec lequel le tronçon de convoyeur de transport (18) positionnable dans le sens horizontal (Y) est monté en amont du magasin à étages (21) dans le sens de la direction de transport (X).

3. Dispositif (2) selon la revendication 1 ou 2, comprenant un poste de compensation manuelle (20) prévu entre le dispositif de formation et un dispositif d'empilage (3) et équipé d'un dispositif de levage pour soulever les formats découpés du plan de transport (4) afin de permettre le passage de l'ensemble suivant.

4. Dispositif (2) selon l'une des revendications précédentes, avec lequel le magasin à étages (21), à chaque étage (15), et le tronçon de convoyeur de transport (18) positionnable dans le sens horizontal présentent respectivement des tronçons de convoyeur à rouleaux.

5. Dispositif (2) selon l'une des revendications précédentes, lequel est conçu pour faire passer les ensembles complets amenés à travers un étage supplémentaire (15) prévu à cet effet.

6. Dispositif (2) selon l'une des revendications précédentes, avec lequel chacun des étages (15) présente un dispositif de transport séparé pour le transport des formats découpés dans la direction du transport (X).

7. Dispositif (2) selon l'une des revendications précédentes, comprenant une butée indépendante des étages pouvant être montée et descendue pour l'ajustage et le formation des ensembles dans la direction du transport (X).

8. Installation de formation et d'empilage d'ensembles de formats découpés des panneaux comprenant :
un dispositif (2) selon l'une des revendications précédentes,
et un dispositif d'empilage (3) monté en aval pour empiler des ensembles complets en piles comprenant des postes d'empilage (17) fonctionnant de manière autonome dans un nombre correspondant au nombre d'étages (15) du dispositif de formation (2).

9. Installation de formation et d'empilage d'ensembles de formats découpés des panneaux comprenant :
un dispositif (2) selon l'une des revendications 1 à 7,
et un dispositif (1) monté en amont pour faire tourner un groupe de formats découpés dans le plan des formats découpés, le dispositif de rotation (1) étant conçu pour faire tourner le groupe lorsque le groupe ne correspond pas à l'alignement (X) prédéfini dans l'ensemble dans le plan des formats découpés,
et un dispositif (3) monté en aval du dispositif de formation (2) pour empiler les ensembles en piles,
le dispositif de rotation (1) étant conçu pour faire tourner les groupes de formats découpés qui peuvent dépasser d'un ensemble dans une certaine direction,
et l'installation présente un dispositif (7, 15, 18) pour séparer les groupes dans au moins une direction (X) pour produire des ensembles ou des parties d'ensembles des groupes dépassant d'un ensemble.

10. Installation selon la revendication 8 en liaison avec la revendication 9.
